# EUROPEAN PATENT SPECIFICATION

(11) **EP 0 660 593 B1**
(45) Date of publication and mention of the grant of the patent: **16.02.2000**
(21) Application number: 94309614.9
(22) Date of filing: 21.12.1994
(51) Int. Cl.: H04N 3/12, H04N 5/74

(54) **Displaying halftone images using a spatial light modulator and a modulated light source**
Anzeige von Halbtonbildern mittels räumlichem Lichtmodulator und modulierter Lichtquelle
Affichage d'images à demi-teinte utilisant la modulation spatiale de lumière et une source de lumière modulée

(30) Priority: 24.12.1993 JP 34757693
(43) Date of publication of application: 28.06.1995
(73) Proprietor: SONY CORPORATION, Tokyo (JP); TEXAS INSTRUMENTS INCORPORATED, Dallas Texas 75265 (US)
(72) Inventor: Ashizaki, Koji, c/o Intellectual Property Division, Shinagawa-ku, Tokyo 141 (JP)
(74) Representative: Cotter, Ivan John

(56) References cited:
- EP-A- 0 261 896
- EP-A- 0 392 256
- EP-A- 0 493 800
- WO-A-92/09064
- WO-A-92/12506

## Description

This invention relates to the display of gradations. More particularly, but not exclusively, the invention is applicable to a case where gradations are displayed on an image display device on which microscopic mirror elements are arranged as on-off type spatial light modulating elements in accordance with pixels of image data.

There has been proposed an image display device in which on-off type spatial light modulating elements composed of microscopic mirror elements are flatly arranged in accordance with pixels forming an image of image data, and an inclination of each microscopic mirror element is controlled according to the respective pixel, so that the image is displayed by reflection of light incident on the microscopic mirror elements. See Japanese Patent Applications Publication Nos. JP-A-60-179781 (corresponding to EP-A-0 139 991), JP-A-3-40693 (corresponding to EP-A-0 395 529) and JP-A-174112.

This image display device is composed of a plenty of microscopic mirror elements each having a size of, for instance, about 17µm square, which are arranged according to the arrangement of the pixels of the image data (for instance 768 x 576 pixels). In this way, a reflecting surface is formed having approximately the same size as that of a 1/2 inch Charge Coupled Device (solid state imaging device). The microscopic mirror elements are so arranged as to correspond to the memory cells of a frame memory which correspond to the arrangement of the pixels of the image data. According to a state of each memory cell, an inclination state of the respective corresponding microscopic mirror element is controlled individually.

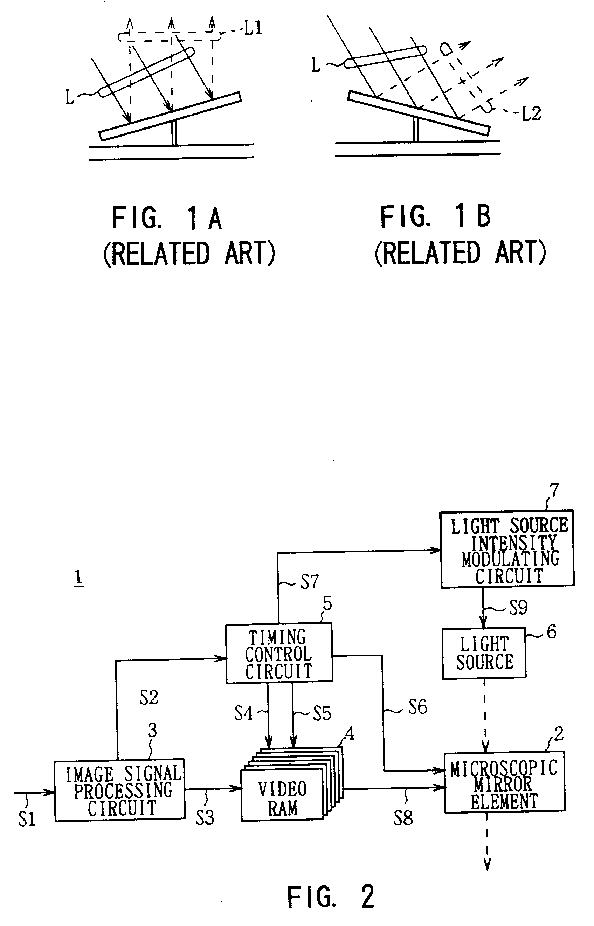

In practice, as shown in Figs. 1A and 1B, when the memory cell is in an on-state, the corresponding microscopic mirror element is inclined by +10° from the neutral state, as shown in Fig. 1A, and when the memory cell is in an off-state, it is inclined by -10°, as shown in Fig. 1B. In this way, the direction in which the incident light L is reflected by the mirror surface of each microscopic mirror element is switched, such that the difference between the path of effective reflected light L1 which is needed to form an image and the path of ineffective reflected light L2 is unnecessary to form an image becomes 20°. In this way, with the effective reflected light L1, the desired image can be displayed.

By the way, when it is intended to perform not only a two-gradation-display by on-off switching but also a half-tone-display in an image display device which is utilizing on-off type spatial light modulating elements, a pulse-width modulation scheme has been used, according to which the on-state or off-state is held during a time which corresponds to a bit weight of a digital value of each pixel of the image data.

Therefore, the gradations display is controlled to have a duration which is based on a length of a unit time. However, in the gradations display scheme which relies on pulse-width modulation, if it is intended to display a lot of gradations, the period of the frame becomes several hundreds times the unit time or more. As a result, there has been a problem that the frame frequency becomes so low that a flicker is sensed if the unit time length cannot be shortened.

International (PCT) Patent Application Publications Nos WO-A-92/12506 and WO-A-92/09064 disclose display devices utilizing on-off type spatial light modulating elements (mirrors) in which a pulse-width modulation scheme is used.

European Patent Application Publication No. EP-A-0 261 896 discloses a method and display device for producing an image, according to the pre-characterising parts of claims 1 and 9, respectively, hereof. The arrangement disclosed in EP-A-0 261 896 uses fluorescent tubes as a light source and a matrix of bistable ferroelectric liquid crystals as the spatial light modulating elements. Loading (writing) and exposure (illumination) are carried out alternately. Thus, the frame duration is increased and flicker is likely to occur.

The present invention provides such a method and display device, characterised in that, while the spatial light modulating elements are being illuminated with the light intensity for a current one of the bit frames, the next one of the bit frames is loaded into the elements.

That is, loading and illumination are carried out simultaneously, thus enabling a reduction in frame duration. Thus, the occurrence of flicker can be effectively avoided, or at least reduced, and a lot of gradations can be certainly displayed at high speed.

The invention will now be further described, by way of illustrative and non-limiting example, with reference to the accompanying drawings, in which like parts are designated by like reference signs, and in which:
Figs. 1A and 1B are schematic diagrams explaining the operation of a microscopic mirror element which forms a spatial light modulating element in a previously proposed image display device;
Fig. 2 is a block diagram showing the construction of an image display device for implementing gradations display methods embodying this invention;
Figs. 3A to 3F are timing charts for explaining a gradations display method which relies on pulse-width modulation;
Figs. 4A to 4F are timing charts explaining a gradations display method according to a first embodiment of this invention;
Figs. 5A to 5E are timing charts explaining a gradations display method according to a second embodiment of this invention;
Fig. 6 is a characteristic curvilinear diagram showing the relationship between light intensity variation and state holding durations in the gradations display method of Figs. 5A to 5E; and
Figs. 7A to 7F are timing charts explaining a third embodiment of the gradations display method of this invention.

Preferred embodiments of this invention will be described with reference to the accompanying drawings:

### (1) Construction of the image display device

Referring to Fig. 2, the reference numeral 1 generally designates an image display device utilizing on-off type spatial light modulating elements 2 comprised of microscopic mirror elements for implementing the gradations display method according to this invention. An image signal S1 to be displayed on the microscopic mirror elements 2 is transformed to a synchronizing signal S2 and an image data S3 in an image signal processing circuit 3. The image data S3 is then written into a video RAM 4 and stored temporarily as a set of bit frames.

A timing control circuit 5 controls the timings of writing into the video RAM 4 (S4), reading out of the video RAM 4 (S5), writing into the microscopic mirror elements 2 (S6), and changing the light intensity of the light source 6 (S7), based on both of the synchronizing signal S2 separated from the image signal S1 and the timing signal generated inwardly.

The image data S3 stored in the video RAM 4 is read into the microscopic mirror elements 2 per bit frame, in accordance with a write control signal S6. Depending on an image data S8, a state of each pixel of microscopic mirror elements 2 is modified to on or off. Then, at the same time the state of each pixel of the microscopic mirror elements 2 is changed to ON or OFF, a light intensity control signal S7 is sent from the timing control circuit 5 to a light intensity modulating circuit 7, besides, a light intensity signal S9 for determining a light intensity is sent from the light intensity modulating circuit 7 to the light source 6.

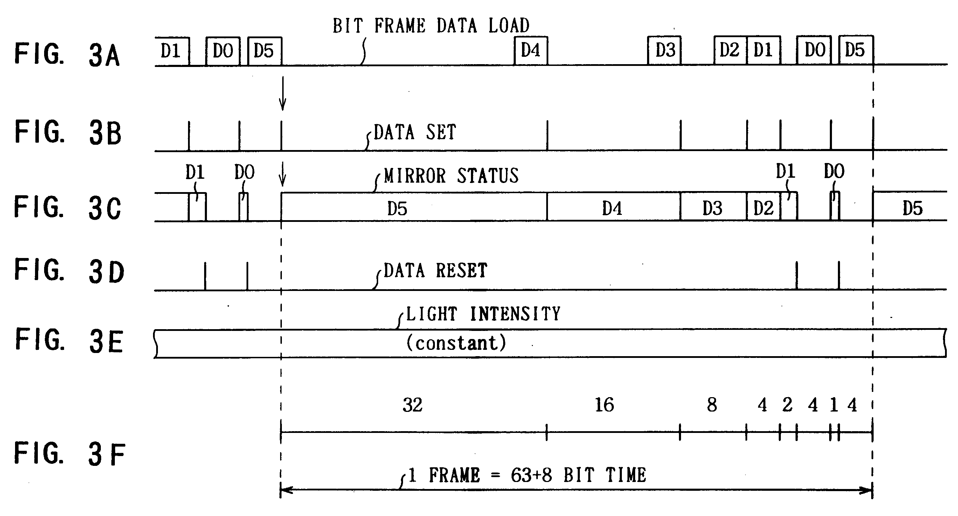

In this embodiment, the image display device 1 having such a circuit construction is utilized for modifying a timing of transferring the image data S8, a timing of switching each pixel of the microscopic mirror elements 2 to on or off, and an intensity of light emitted from the light source 6, so that the gradations are displayed. The gradations displaying method of this invention is shown in Figs. 3A to 3F, 4A to 4F, 5A to 5E, 6, and 7A to 7F,in the form of timing diagrams regarding the microscopic mirror elements 2. In this embodiment, the case where 64 gradations are displayed with the image displaying device 1 is described.

In practice, in view of 64 gradations of image, each pixel has six bits digital data. So, the video RAM 4 is comprised of six sheets of bit frames. Besides, it is set that 4/71 times a frame time of the image signal S1 is spent to transfer one sheet of bit frame of the image data to the microscopic mirror elements 2. The microscopic mirror elements 2 are set to on or off by a set signal after the transferring of the pixel data. Moreover, a reset signal for rendering it off can be input to the microscopic mirror elements 2.

### (2) Gradations displaying method of a pulse-width modulation

Referring to Figs. 3A to 3F, a timing is shown of the case where gradations are displayed with the conventional pulse-width modulation using the image display device 1 which has been described with reference to Fig. 2. The duration of on or off which is corresponding to the least significant bit of the digital data, out of the durations of on or off of pixels for displaying the gradation, is required to be less than or equal to 1/63 times a frame time. Two bits which are having lesser significance out of six bits are required to be set not only on/off time for displaying a gradation but a time for transferring the image data for one sheet of bit frame toward the microscopic mirror elements. Hereby, the duration of on or off which is corresponding to the least significant bit becomes 1/71 times a frame period. This duration, which is equivalent to a unit time, is hereinafter designated as a bit time.

As to the displaying procedure of the gradations displaying which is relying upon the pulse-width modulation, the bit frame data is first transferred to the microscopic mirror elements 2 (Fig. 3A), and then, the bit frame data is reflected in the states of the microscopic mirror elements 2 (Fig. 3C) by a signal for setting the states of the microscopic mirror elements 2 (Fig. 3B). The states are held for a certain duration. And then, transferring of the data, setting of the states, and holding of the states are likewise performed with respect to the next bit frame data. However, in the case of the frame data of two bits having lesser significance whose durations of on or off are shorter than the transferring time of the bit frame data, the states of the microscopic mirror elements (Fig. 3C) are switched to off during the transferring of the next frame data, using a reset signal (Fig. 3D) for switching off the states of the microscopic mirror elements. During all these procedures, the intensity of the light source is constant.

As to a setting of the on/off duration that is the state holding duration for the microscopic mirror elements 2, in the conventional gradations displaying which is relying upon the pulse-width modulation, a bit which is to be held longer was set to a longer state holding duration. In contrast to this, in a gradations displaying method of an embodiment of the invention on/off durations which correspond to the respective bit frames may be held constant, and the light intensity of the light source 6 at the time is controlled so that the gradations are displayed.

### (3) First embodiment of gradations displaying method

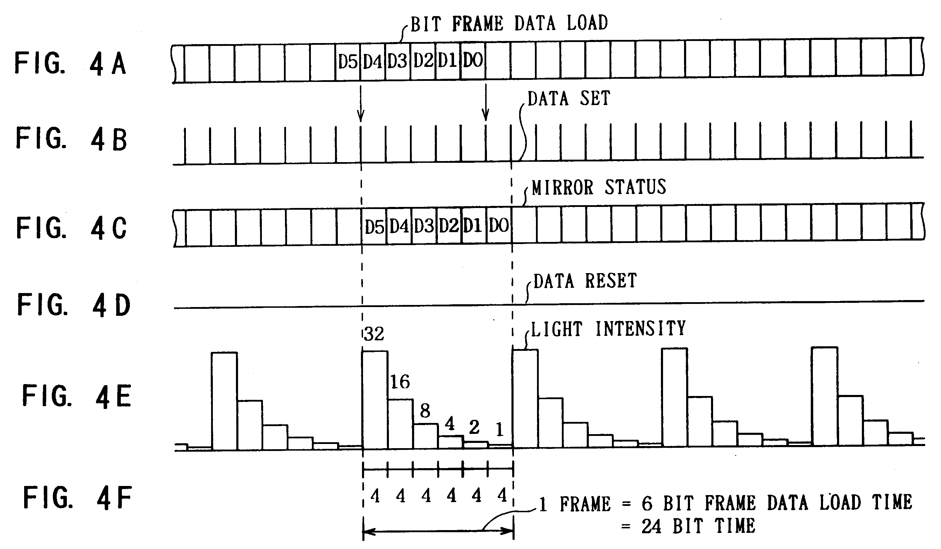

A timing of the first embodiment of the gradations displaying method of this invention utilizing the image display device 1, which has been described hereinabove with reference to Figs. 2A to 2F, is shown in Figs. 4A to 4F. In the displaying procedure in the gradations displaying of this embodiment, at first, the bit frame data is transferred to the microscopic mirror elements 2 (Fig. 4A), and the bit frame data is then reflected in the states of the microscopic mirror elements 2 (Fig. 4C) by the signal for setting the states of the microscopic mirror elements 2 (Fig. 4B). At this time, the intensity of the light which is emitted from the light source (Fig. 4E) is beforehand changed to the stated intensity.

These states are held for a stated duration. And then, a transferring of the data, a controlling of the quantity of light, a setting of the states, and a holding of the states are likewise performed with respect to the next bit frame data. Therefore, brightness, that is the gradation, of the pixel is determined by the sum of the light intensity in the duration, out of one frame, when the pixel of the microscopic mirror element 2 is being forced to be on. Generally speaking, light-intensities which correspond to bits are selected to be arranged in the form of involution of 2, such as 1, 2, 4, 8, 16, and 32 times the least intensity.

According to the above construction, a time for one frame can be shortened to become only a minimum time required to transfer the bit frame data. In comparison with the gradations displaying method relying upon the pulse-width modulation which has been described with reference to Figs. 3A to 3F, the time for one frame becomes shorter from 71 bit times (Fig. 3F) to 24 bit times (Fig. 4F), so that the frame frequency can be raised, with the result that an occurrence of flicker at the gradations displaying can be effectively avoided. Moreover, because the reset signal is not used (Fig. 4D), the reset signal itself can be omitted, so that the construction of the timing control circuit 4 can be simplified correspondingly.

### (4) Second embodiment of gradations displaying method

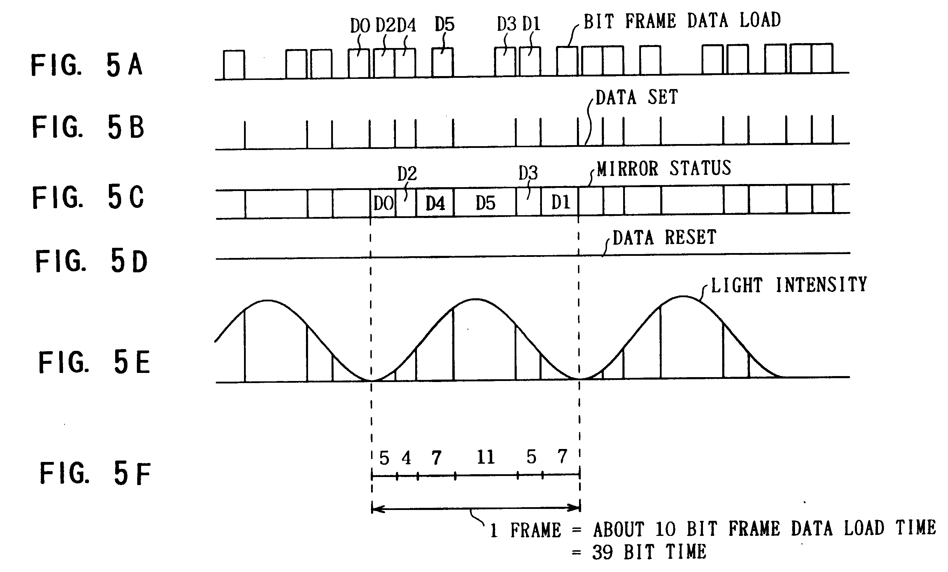

In this second embodiment, the gradations displaying method will be described which is to be applied to the case where the light source 6 can not change its intensity per bit frame as the above-mentioned first embodiment, that is, the case where the modulating frequency of the light intensity of the light source 6 is near to the frame frequency. The timing of the case where the intensity of the light source 6 is modulated by a sine wave of the same frequency as the frame frequency is shown in Figs. 5A to 5E.

In the displaying procedure in the gradations displaying of this embodiment, the bit frame data is transferred to the microscopic mirror elements 2 (Fig. 5A), and the bit frame data is then reflected in the states of the microscopic mirror elements 2 (Fig. 5C) by the signal for setting the states of the microscopic mirror elements 2 (Fig. 5B). This states are held for a certain duration. And then, transferring of the data, controlling of the quantity of light, setting of the states, and holding of the states are likewise performed with respect to the next bit frame data. The state holding durations of this case are determined by dividing one frame, such that the integration of the quantity of the light which is emitted from the light source 6 during that time becomes the required brightness of the corresponding bit, in respect that the intensity of the light emitted from the light source 6 changes according to time (Fig. 4E).

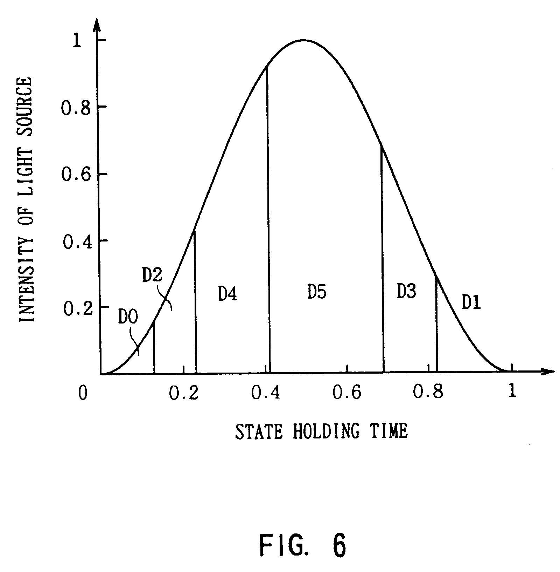

This dividing method varies depending on the modulating pattern of the light source 6 or the number of the displaying gradations or the others. A relationship between the light intensity variation and the state holding durations during one frame in this embodiment is shown in Fig. 6. In this case, the durations are determined in such a manner that the brightness which is allocated to each bit D0, D1, D2, D3, D4, D5 becomes 1: 2: 4: 8: 16 : 32, that is, the integrated value of the quantity of light at each duration becomes 1 : 2: 4: 8: 16 : 32.

According to the above construction, the time for one frame can be shortened. In comparison with the gradations displaying method relying upon the pulse-width modulation which has been described with reference to Figs. 3A to 3F, the time for one frame becomes shorter from 71 bit times (Fig. 3F) to 39 bit times (Fig. 5F), so that the frame frequency can be raised, with the result that an occurrence of flicker at the gradations displaying can be effectively avoided. Moreover, in addition to the fact that the controlling of the light source 6 can be simplified, the reset signal is not used (Fig. 5D), so the reset signal itself can be omitted, hereby the construction of the timing control circuit 4 can be simplified correspondingly.

This gradations displaying method can be applied to the case where the modulation frequency of the light intensity of the light source 6 is near to the frame frequency as well as the case where the ratio of the modulating intensity of the light source 6 is lower. Further, in this gradations displaying method, in the case where any bit holds its state during two times the bit frame data transferring time or more, this long holding bit is divided into fractions and located alternately with the other bit, hereby the blink frequency becomes higher so that flicker can be avoided.

### (5) Third embodiment of gradations displaying method

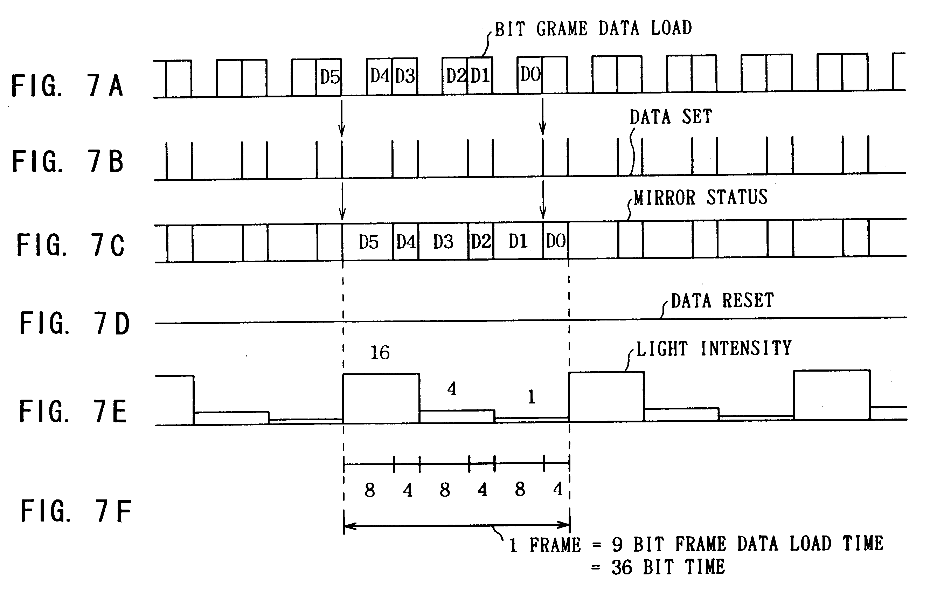

In the third embodiment, a gradations displaying method is described which is adapted for the case where the light source 6 can not change its own intensity for each bit frame as is the above-mentioned embodiment or the case where a number of steps of light intensity of the light source 6 can not be set to a satisfactory large number. The timing of a case where the intensity of the light source 6 is modulated in the three steps, each of which is collecting two bit frames, is shown in Figs. 7A to 7F.

Speaking of the displaying procedure in the gradations displaying of this embodiment, the bit frame data is transferred to the microscopic mirror elements 2 (Fig. 7A), and the bit frame data is then reflected in the states of the microscopic mirror elements 2 (Fig. 7C), by the signal for setting the states of the microscopic mirror elements 2 (Fig. 7B). This states are held for a certain duration. And then, transferring of the data, controlling of the quantity of light, setting of the states, and holding of the states are likewise performed with respect to the next bit frame data.

The state holding durations of this case are determined such that the integrated quantity of the light emitted from the light source 6 during that duration becomes the required brightness of the corresponding bit, in respect that the intensity of the light emitted from the light source changes for each two bit frames (Fig. 7E). Because the light intensities which are corresponding to bits are generally selected to be arranged in the form of involution of 2 such as 1, 2, 4, 8, 16, and 32 times the least intensity, in the case where the intensities of the light source has been collected for each two bit frames like this embodiment, the duration for the brighter one of the two is two times the duration for the darker.

According to the above construction, the time for one frame can be shortened. In comparison with the gradations displaying method relying upon the pulse-width modulation which has been described with reference to Figs. 3A to 3F, the time for one frame becomes shorter from 71 bit times (Fig. 3F) to 36 bit times (Fig. 7F), so that the frame frequency can be raised, with the result that an occurrence of a flicker at the gradations displaying can be effectively avoided. Moreover, in addition to the fact that the controlling of the light source 6 can be simplified, the reset signal is not used (Fig. 7D), hereby the reset signal itself can be omitted, so that the construction of the timing control circuit 4 can be simplified correspondingly.

### (6) Other embodiments

In the above embodiments, 64 gradations are displayed. However, this invention is not limited to this, but is applicable to the cases of the lesser gradations or the more gradations, such as 16 or 256 gradations displayable as the digital data, and the same effect as that of the abovementioned embodiments can be realized. Further, it is not only limited to the black-and-white displaying but also applicable to the color displaying, by combining a plurality of light sources with the microscopic mirror elements.

Further, in the abovementioned embodiment, this invention has been applied to which utilizes the microscopic mirror element as the spatial light modulating element. However, this invention is not limited to this, but is possible to be broadly applied to an image displaying device which utilizes another on-off type spatial light modulating element such as a liquid crystal device. Further, the gradations displaying method of this invention can be applied to the exposure of a printer, a photograph, and a hologram. In such cases, by virtue of its high frame frequency, a high-speed exposure becomes possible. Moreover, the gradation is not only determined by the product of the light intensity and the duration as a reacting condition of materials used for a printer, a photograph, and a hologram, but in the case where the exposing condition changes non-linearly, depends on the exposure number, the duration, etc., the non-linear effect can be weakened.

## Claims

1. A method of producing an image for display using on-off type spatial light modulating elements (2), the method comprising the steps of:
supplying (6, 7), to the on-off type spatial light modulating elements (2), light whose intensity is modulated during a frame of the image;
generating (3, 4) plural bit frames of data representing values of pixels of said frame;
loading said bit frames in succession into the spatial light modulating elements (2);
controlling (5) the on-off states of the spatial light modulating elements (2) to reflect each successive bit frame; and
modulating the intensity of said intensity-modulated light according to the on-off states of the spatial light modulating elements (2) as determined by said state control step whereby the elements (2) are illuminated with light of different intensities during respective portions of a frame period;
characterised in that, while the spatial light modulating elements (2) are being illuminated with the light intensity for a current one of the bit frames, the next one of the bit frames is loaded into the elements (2).

2. A method according to claim 1, wherein the the intensity of said intensity-modulated light has a respective constant value during each of said portions.

3. A method according to claim 2, wherein each said portion corresponds to a respective one of the bit frames.

4. A method according to claim 2, wherein each said portion corresponds to a plurality of the bit frames.

5. A method according to claim 4, wherein the plurality of bit frames corresponding to a said portion are represented by the on-off states of the spatial light modulating elements (2) for respective parts of said portion, the durations of the respective parts in a said portion being proportional to the relative significance of the bits of the associated bit frames.

6. A method according to claim 1, wherein the intensity of said light is modulated by a sine wave of the same frequency as the frame frequency.

7. A method according to any one of claims 1 to 6, wherein the on-off type spatial light modulating elements (2) comprise mirror elements.

8. A method according to any one of claims 1 to 6, wherein the on-off type spatial light modulating elements (2) comprise liquid crystal devices.

9. A display device for producing an image for display, the device comprising:
on-off type spatial light modulating elements (2);
means (6, 7) for supplying, to the on-off type spatial light modulating elements (2), light whose intensity is modulated during a frame of the image;
means (3, 4) for generating plural bit frames of data representing values of pixels of said frame; and
control means (5) for loading said bit frames in succession into the spatial light modulating elements (2), for controlling the on-off states of the spatial light modulating elements (2) to reflect each successive bit frame, and for causing the intensity of said intensity-modulated light to be modulated according to the on-off states of the spacial light modulating elements (2) as determined by said state control step whereby the elements (2) are illuminated with light of different intensities during respective portions of a frame period;
characterised in that said control means (5) is so operative that, while the spatial light modulating elements (2) are being illuminated with the light intensity for a current one of the bit frames, the next one of the bit frames is loaded into the elements (2).

10. A device according to claim 9, so operative that the the intensity of said intensity-modulated light has a respective constant value during each of said portions.

11. A device according to claim 10, wherein each said portion corresponds to a respective one of the bit frames.

12. A device according to claim 10, wherein each said portion corresponds to a plurality of the bit frames.

13. A device according to claim 12, wherein the plurality of bit frames corresponding to a said portion are represented by the on-off states of the spatial light modulating elements (2) for respective parts of said portion, the durations of the respective parts in a said portion being proportional to the relative significance of the bits of the associated bit frames.

14. A device according to claim 9, wherein the intensity of said light is modulated by a sine wave of the same frequency as the frame frequency.

15. A device according to any one of claims 9 to 14, wherein the on-off type spatial light modulating elements (2) comprise mirror elements.

16. A method according to any one of claims 9 to 14, wherein the on-off type spatial light modulating elements (2) comprise liquid crystal devices.

## Patentansprüche

1. Verfahren zur Erzeugung eines Bilds zur Anzeige, wobei Ein-Aus-Raumlicht-Modulationselemente (2) verwendet werden, wobei das Verfahren folgende Schritte umfaßt:
Liefern (6, 7) - zu den Ein-Aus-Raumlicht-Modulationselementen (2) - von Licht, dessen Intensität während eines Vollbilds des Bilds moduliert ist;
Erzeugen (3, 4) von mehreren Vollbildbitdaten, die Werte von Pixeln dieses Vollbilds darstellen;
Laden der Bitvollbilder nacheinander in die Raumlicht-Modulationselemente (2);
Steuern der Ein-Aus-Zustände der Raumlicht-Modulationselemente (2), um jeden nachfolgenden Bitrahmen zu reflektieren; und
Modulieren der Intensität des intensitäts-modulierten Lichts gemäß den Ein-Aus-Zuständen der Raumlicht-Modulationselemente (2), wie durch den Zustandssteuerschritt festgelegt wird, wodurch die Elemente (2) mit Licht unterschiedlicher Intensitäten während entsprechender Bereiche einer Vollbildperiode beleuchtet werden;
dadurch gekennzeichnet, daß, wenn die Raumlicht-Modulationselemente (2) mit der Lichtintensität für ein laufendes der Bitvollbilder beleuchtet werden, das nächste der Bitvollbilder in die Elemente (2) geladen wird.

2. Verfahren nach Anspruch 1, wobei die Intensität des intensitäts-modulierten Lichts einen entsprechenden konstanten Wert während eines jeden der Bereiche hat.

3. Verfahren Anspruch 2, wobei jeder Bereich einem entsprechenden der Bitvollbilder entspricht.

4. Verfahren nach Anspruch 2, wobei jeder Bereich mehreren Bitvollbildern entspricht.

5. Verfahren nach Anspruch 4, wobei die mehreren Bitrahmen, die diesem Bereich entsprechen, durch die Ein-Aus-Zustände der Raumlicht-Modulationselemente (2) für entsprechende Teile dieses Bereichs dargestellt sind, wobei die Zeitdauer der entsprechenden Teile in diesem Bereich proportional zur relativen Wertigkeit der Bits der damit verknüpften Bitvollbilder ist.

6. Verfahren nach Anspruch 1, wobei die Intensität des Lichts durch eine Sinuswelle der gleichen Frequenz wie die Vollbildfrequenz moduliert ist.

7. Verfahren nach einem der Ansprüche 1 bis 6, wobei die Ein-Aus-Raumlicht-Modulationselemente (2) Spiegelelemente umfassen.

8. Verfahren nach einem der Ansprüche 1 bis 6, wobei die Ein-Aus-Raumlicht-Modulationselemente (2) Flüssigkristalleinrichtungen umfassen.

9. Anzeigeeinrichtung zum Erzeugen eines Bilds zur Anzeige, wobei die Einrichtung umfaßt:
Ein-Aus-Raumlicht-Modulationselemente (2);
eine Einrichtung (6,7) zum Liefern - zu den Ein-Aus-Raumlicht-Modulationselementen (2) - von Licht, dessen Intensität während eines Vollbilds des Bilds moduliert ist;
eine Einrichtung (3, 4) zum Erzeugen von mehreren Vollbildbitdaten, die Werte von Pixeln dieses Vollbilds darstellen; und
eine Steuerung (5) zum Laden der Bitvollbilder nacheinander in die Raumlicht-Modulationselemente (2), um die Ein-Aus-Zustände der Raumlicht-Modulationselemente zu steuern, um jeden nachfolgenden Bitrahmen zu reflektieren, und um zu veranlassen, daß die Intensität des intensitäts-modulierten Lichts gemäß den Ein-Aus-Zuständen der Raumlicht-Modulationselemente (2) moduliert werden, wie durch den Zustandssteuerschritt festgelegt wird, wodurch die Elemente (2) mit Licht von unterschiedlichen Intensitäten während entsprechender Bereiche einer Vollbildperiode beleuchtet sind;
dadurch gekennzeichnet, daß die Steuerung (5) wirksam ist, daß, während die Raumlicht-Modulationselemente (2) mit der Lichtintensität für ein laufendes der Bitvollbilder beleuchtet werden, das nächste der Bitvollbilder in die Elemente (2) geladen wird.

10. Einrichtung nach Anspruch 9, die wirksam ist, daß die Intensität des intensitäts-modulierten Lichts einen entsprechenden konstanten Wert während eines jeden der Bereiche hat.

11. Einrichtung nach Anspruch 10, wobei jeder genannte Bereich einem entsprechenden der Bitvollbilder entspricht.

12. Einrichtung nach Anspruch 10, wobei jeder Bereich mehreren Bitvollbildern entspricht.

13. Einrichtung nach Anspruch 12, wobei die mehreren Bitvollbilder, die diesem Bereich entsprechen, durch die Ein-Aus-Zustände der Raumlicht-Modulationselemente (2) für entsprechende Teile dieses Bereichs dargestellt sind, wobei die Zeitdauer der jeweiligen Teile in diesem Bereich proportional zur relativen Wertigkeit der Bits der miteinander verknüpften Bitvollbilder ist.

14. Einrichtung nach Anspruch 9, wobei die Intensität des Lichts durch eine Sinuswelle der gleichen Frequenz wie die Vollbildfrequenz moduliert ist.

15. Einrichtung nach einem der Ansprüche 9 bis 14, wobei die Ein-Aus-Raumlicht-Modulationselemente Spiegelelemente umfassen.

16. Verfahren nach einem der Ansprüche 9 bis 14, wobei die Ein-Aus-Raumlicht-Modulationselemente (2) Flüssigkristalleinrichtungen umfassen.

## Revendications

1. Procédé de production d'une image pour afficher des éléments de modulation de lumière spatiale du type en service-hors service (2), le procédé comprenant les étapes de :
fourniture (6, 7), aux éléments de modulation de lumière spatiale du type en service-hors service (2), dont l'intensité est modulée pendant une trame de l'image ;
génération (3, 4) de plusieurs trames de bits de données représentant des valeurs de pixels de ladite trame ;
chargement desdites trames de bits successivement dans les éléments de modulation de lumière spatiale (2);
commande (5) de l'état en service-hors service des éléments de modulation de lumière spatiale (2) pour réfléchir chaque trame de bits successive ; et
modulation de l'intensité de ladite lumière modulée en intensité selon les états en service-hors service des éléments de modulation de lumière spatiale (2) comme déterminé par ladite étape de commande d'état de sorte que les éléments (2) sont éliminés avec la lumière de différentes intensités pendant des parties respectives d'une période de trame;
caractérisé en ce que, alors que les éléments de modulation de lumière spatiale (2) sont illuminés avec l'intensité lumineuse pendant une trame actuelle des trames de bits, la suivante des trames de bits est chargée dans les éléments (2).

2. Procédé selon la revendication 1, dans laquelle l'intensité de ladite lumière modulée en intensité a une valeur constante respective pendant chacune desdites parties.

3. Procédé selon la revendication 2, dans lequel chaque dite partie correspond à celle respective des trames de bits.

4. Procédé selon la revendication 2, dans lequel chaque dite partie correspond à une pluralité de trames de bits.

5. Procédé selon la revendication 4, dans lequel la pluralité de trames de bits correspondant à ladite partie sont représentées par les états en service-hors service des éléments de modulation de lumière spatiale (2) pour des parties respectives de ladite partie, la durée des parties respectives dans ladite partie étant proportionnelle à la pondération relative des bits des trames de bits associées.

6. Procédé selon la revendication 1, dans lequel l'intensité de ladite lumière est modulée par une onde sinusoïdale de la même fréquence que la fréquence de trame.

7. Procédé selon l'une quelconque des revendications 1 à 6, dans lequel les éléments de modulation de lumière spatiale de type en service-hors service (2) comprennent des éléments de miroir.

8. Procédé selon l'une quelconque des revendications 1 à 6, dans lequel des éléments de modulation de lumière spatiale du type en service-hors service (2) comprennent des dispositifs à cristaux liquides.

9. Dispositif d'affichage pour produire une image pour afficher, le dispositif comprenant :
des éléments de modulation de lumière spatiale du type en service-hors service (2) ;
un moyen (6, 7) pour fournir, aux éléments de modulation de lumière spatiale du type en service-hors service (2), de la lumière dont l'intensité est modulée pendant une trame de l'image ;
un moyen (3, 4) pour générer plusieurs trames de bits de données représentant des valeurs de pixels de ladite trame ; et
un moyen de commande (5) pour charger lesdites trames de bits successivement dans les éléments de modulation de lumière spatiale (2), pour commander les états en service-hors service des éléments de modulation de lumière spatiale (2) pour réfléchir chaque trame de bits successive, et pour provoquer la modulation de l'intensité de ladite lumière modulée en intensité selon les états en service-hors service des éléments de modulation de lumière spatiale (2) comme déterminé par ladite étape de commande d'état de sorte que les éléments (2) sont illuminés avec la lumière de différentes intensités pendant des parties respectives d'une période de trame ;
caractérisé en ce que ledit moyen de commande (5) est fonctionnel pour que, alors que les éléments de modulation de lumière spatiale (2) sont illuminés avec l'intensité lumineuse pour une trame actuelle des trames de bits, la suivante des trames de bits est chargée dans les éléments (2).

10. Dispositif selon la revendication 9, fonctionnel pour que l'intensité de ladite lumière modulée en intensité ait une valeur constante respective pendant chacune desdites parties.

11. Dispositif selon la revendication 10, dans lequel chacune de ladite partie correspond à celle respective des trames de bits.

12. Dispositif selon la revendication 10, dans lequel chacune de ladite partie correspond à une pluralité de trames de bits.

13. Dispositif selon la revendication 12, dans lequel la pluralité de trames de bits correspondant à ladite partie sont représentées par des états en service-hors service des éléments de modulation de lumière spatiale (2) pour des parties respectives de ladite partie, les durées des parties respectives dans ladite partie étant proportionnelles à la pondération relative des bits des trames de bits associées.

14. Dispositif selon la revendication 9, dans lequel l'intensité de ladite lumière est modulée par une onde sinusoïdale de la même fréquence que la fréquence de trame.

15. Dispositif selon l'une quelconque des revendications 9 à 14, dans lequel les éléments de modulation de lumière spatiale du type en service-hors service (2) comprennent des éléments de miroir.

16. Procédé selon l'une quelconque des revendications 9 à 14, dans lequel les éléments de modulation de lumière spatiale du type en service-hors service (2) comprennent des dispositifs à cristaux liquides.
